# FASCICULE DE BREVET EUROPEEN

(11) **EP 1 052 004 B1**
(45) Date de publication et mention de la délivrance du brevet: **14.06.2006**
(21) Numéro de dépôt: 00400944.5
(22) Date de dépôt: 06.04.2000
(51) Int. Cl.: B01D 3/34, B01D 1/14

(54) **Procédé et dispositif pour la concentration par évaporation accélérée de rejets aqueux**
Verfahren und Vorrichtung zur Konzentrierung von Abwasser durch beschleunigte Verdampfung
Process and apparatus for concentrating waste water by accelerated evaporation

(30) Priorité: 12.05.1999 FR 9906145
(43) Date de publication de la demande: 15.11.2000
(73) Titulaire: Institut Français du Pétrole, 92852 Rueil-Malmaison Cedex (FR); Nucleos France, 75004 Paris (FR)
(72) Inventeur: Stock, Philippe, 75006 Paris (FR); Bocard, Christian, 78112 Fourqueux (FR); Canal, Philippe, 75004 Paris (FR)

(56) Documents cités:
- WO-A-83/04185
- WO-A-98/23349
- DE-A- 2 706 430
- FR-A- 2 298 359
- GB-A- 658 286
- GB-A- 2 143 144
- US-A- 4 104 112
- PATENT ABSTRACTS OF JAPAN vol. 011, no. 136 (C-419), 30 avril 1987 (1987-04-30) & JP 61 274701 A (KENICHI NAKAGAWA), 4 décembre 1986 (1986-12-04)

## Description

La présente invention concerne un procédé et un dispositif pour assurer par évaporation la concentration de liquides aqueux, par exemple des lixiviats d'ordures ménagères et de mâchefers.

L'évaporation naturelle est un processus spontané de conversion de chaleur en énergie latente à l'interface eau/air. Pour des conditions atmosphériques données, le rythme d'évaporation est proportionnel à la superficie de l'interface eau/air.

On connaît le document FR 2717098 qui décrit un procédé et un dispositif de mise en oeuvre pour la déshydratation par évaporation sous l'action d'un vent naturel. Cette technique, qui présente notamment les avantages d'une relative simplicité, obtient des performances qui sont directement fonction des conditions météorologiques locales : température ambiante et force des vents.

La présente invention utilise le concept d'un module d'évaporation fermé dont la circulation d'un gaz chaud d'évaporation est assurée par des moyens mécaniques, le gaz chaud provenant de l'utilisation directe ouindirecte d'une source voisine, biomasse, brûleurs, échappement de moteurs thermiques, etc.

Ce procédé peut présenter les avantages suivants : une efficacité pratiquement indépendante des conditions météorologiques locales, une optimisation du fonctionnement du module, un lavage des gaz de rejet.

Ainsi, la présente invention concerne un procédé pour concentrer par évaporation un lixiviat de décharge sous l'effet d'une circulation d'un gaz d'évaporation à travers au moins un panneau alvéolaire arrosé par ledit lixiviat, dans lequel on effectue les étapes suivantes:
- on place ledit panneau dans une enceinte fermée
- on effectue dans ladite enceinte une circulation forcée dudit gaz d'évaporation, entre des moyens d'admission placés du côté arrosage dudit lixiviat et des moyens de sortie du gaz, ledit panneau étant intercalé entre l'admission et la sortie de façon que ledit gaz passe à travers ledit panneau,
- on équipe lesdits moyens d'admission de moyens d'apport d'énergie calorifique provenant de la combustion d'un biogaz produit par fermentation de déchets
- on régule la température dudit gaz de façon que celui-ci ait une température comprise entre 25°C et 45°C.

On peut réguler la température du gaz d'évaporation en injectant du gaz d'échappement provenant de la combustion d'un biogaz produit par fermentation de déchets.

On peut réguler la température du gaz d'évaporation utilisant un échangeur thermique dont l'énergie calorifique provient d'un fluide de refroidissement de moyens de combustion d'un biogaz produit par fermentation de déchets.

L'enceinte peut comporter des moyens d'aspiration du gaz contenu dans ladite enceinte, par exemple un ventilateur.

On peut filtrer sur des charbons actifs catalysés l'effluent et/ou le gaz d'évaporation.

La partie de l'effluent non évaporé peut être recyclée en amont de l'arrosage du panneau.

L'invention concerne également une installation de traitement par évaporation d'un effluent aqueux, comportant au moins un panneau alvéolaire arrosé par ledit effluent grâce à des moyens de pompage. L'installation comporte une enceinte fermée comprenant une admission et une sortie d'un gaz d'évaporation en circulation forcée dans ladite enceinte, ainsi que des moyens pour recueillir des biogaz issus de la fermentation de déchets Le panneau est disposé dans ladite enceinte entre l'admission et la sortie du gaz, et ladite admission comporte des moyens d'apport d'énergie calorifique provenant de la combustion desdits biogaz et des moyens de façon que celui-ci ait une température comprise entre 25°C et 45°C.

Un ventilateur peut être disposé sur ladite enceinte pour effectuer la circulation forcée du gaz.

Un moteur thermique alimenté par du biogaz peut être une source de l'énergie calorifique.

Les gaz d'échappement dudit moteur thermique peuvent être injectés dans ladite admission de gaz.

Un échangeur peut équiper ladite admission et ledit échangeur peut utiliser l'énergie calorifique du fluide de refroidissement dudit moteur thermique, qu'il soit gaz ou liquide.

Le moteur thermique peut entraîner un générateur d'énergie électrique, laquelle peut être notamment utilisée pour motoriser le ventilateur de circulation de gaz, les pompes de circulation de fluides, les télécommandes de vannes.

L'enceinte peut comprendre des moyens de filtration de l'effluent non évaporé et/ou du gaz d'évaporation par des charbons actifs catalysés.

La présente invention sera mieux comprise et ses avantages apparaîtront plus clairement à la lecture des exemples suivants, nullement limitatifs, et illustrés par les figures ci-après annexées, parmi lesquelles:
- La figure 1 décrit un module fermé d'évaporation accélérée.
- La figure 2 illustre le schéma de principe de fonctionnement du procédé selon l'invention.
- Les figures 3A et 3B décrivent la réalisation de deux moyens d'apport d'énergie calorifique au gaz d'évaporation.
- La figure 4 représente un exemple de réalisation d'un distributeur de gaz chaud.

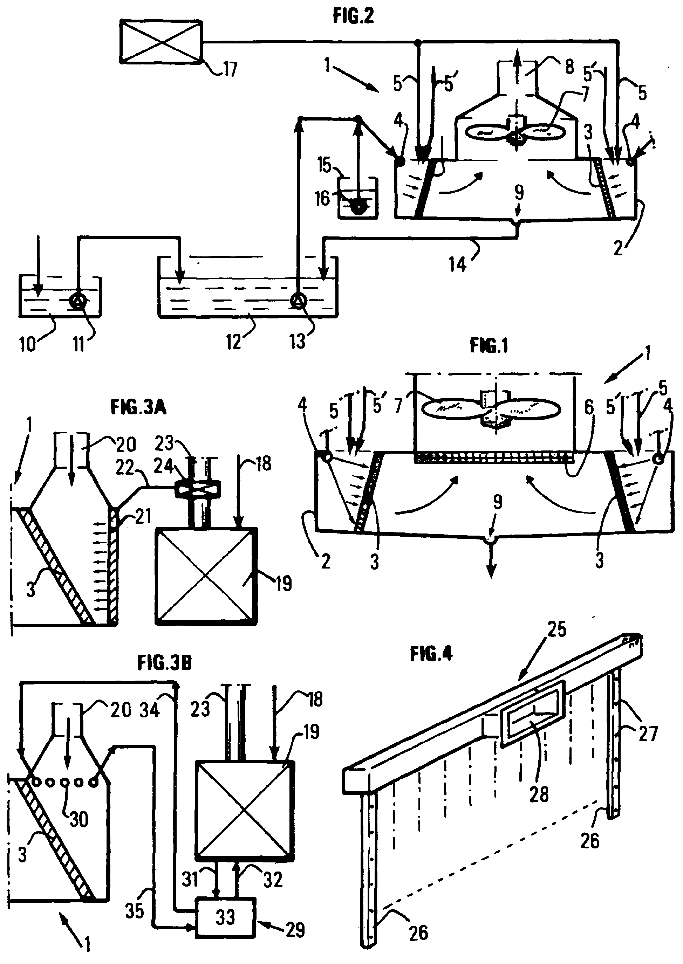

Sur la figure 1, la référence 1 désigne l'ensemble du module fermé d'évaporation. Un caisson principal 2, par exemple de forme parallélépipèdique ayant une base de dimensions d'environ 12 m sur 6 m et d'une hauteur d'environ 3 m, contient des panneaux d'évaporation 3. Les panneaux d'évaporation 3 sont de préférence du type de ceux décrits dans le document FR 2717098, cité ici en référence. Ils sont situés le long de deux des cotés du caisson, légèrement inclinés vers le centre pour recevoir l'aspersion de l'effluent liquide par des rampes d'aspersion 4 disposées coté admission du gaz évaporateur. Les références 5 et 5' désignent les moyens d'admission du gaz évaporateur qui traverse les panneaux évaporateurs aspergés par l'effluent à concentrer.

Dans la partie centrale du caisson 1, on dispose de moyens d'aspiration du gaz évaporateur de façon à assurer un débit optimal à travers les panneaux d'évaporation. Ces moyens sont composés : d'un séparateur de gouttes 6, d'au moins un ventilateur 7, et d'un conduit de sortie de gaz 8, soit directement à l'air libre, soit vers une cheminée, ou parfois vers un système d'épuration. L'effluent liquide excédentaire s'écoule dans la gouttière 9. Afin de traiter les odeurs des effluents de lixiviats de décharge d'ordures ménagères, des charbons actifs catalysés peuvent être placés derrière la surface d'échange, à l'intérieur du module pour que les lixiviats non évaporés percolent à travers les charbons actifs et soient désodorisés.

Les évaluations théoriques de performance d'un module selon la figure 1, avec admission directe de l'air ambiant, donnent les résultats suivants:
- à Nîmes: 2200 m³ an;
- à Besançon: 900 m³ an;
- à Paris: 200 m³ an.

Il est clair que les conditions climatiques : température moyenne ambiante et hygrométrie, sont des facteurs importants vis à vis des performances du module fermé.

Aussi, selon l'invention, le fait d'utiliser des sources, voisines de l'installation, en énergie calorifique permettant d'admettre dans le module un gaz chaud (entre 25°et 45°C) et sec, autorise des rendements intéressants quelque soit la région ou la saison.

Les performances évaluées ci-dessus correspondent à un module fermé selon les dimensions données plus haut, à une puissance des pompes d'arrosage de 3 kW/h, et à un diamètre de ventilateur de 4 m développant une puissance d'environ 7,5 kW. Ces dimensions ne sont pas limitatives de la présente invention.

La figure 2 décrit le schéma de principe de l'installation complète pour la mise en oeuvre du procédé selon l'invention. Le bac 10 est destiné à recevoir l'effluent à traiter. L'effluent peut être filtré en amont ou en aval de la pompe 11 qui transporte l'effluent vers un bassin de stockage 12. Une pompe 13 refoule l'effluent en le projetant par des moyens d'aspersion 4 sur les mailles des panneaux d'évaporation 3. Grâce au ventilateur 7, une circulation de gaz est établie et contrôlée entre les admissions 5 de gaz chaud ou 5' d'air ambiant et la sortie 8, en traversant les panneaux d'évaporation où l'effluent s'évapore en partie. La partie de l'effluent liquide non évaporée est recueillie par la gouttière 9 et renvoyée dans le bassin 12 par la conduite 14 pour être recyclée dans le circuit d'évaporation. Un bac auxiliaire 15, équipé d'une pompe 16, peut contenir un bactéricide qui peut être utilisé pour nettoyer à intervalle régulier les mailles des panneaux d'évaporation. Les admissions 5 sont schématiquement raccordées sur cette figure à une source 17 de gaz chaud et relativement sec. Les admissions 5' représentent des entrées d'air ambiant. Ainsi, le gaz d'évaporation peut être régulé en température par le mélange gaz chaud et air ambiant.

La figure 3A décrit plus précisément les moyens d'apport calorifique au gaz d'évaporation à l'admission du module de façon que le gaz chaud ait une température régulée entre 25° et 45°C environ, c'est à dire en condition d'évaporation naturelle, mais optimale. La référence 18 désigne l'alimentation en biogaz d'un moteur thermique 19 qui généralement entraîne un générateur d'électricité. Le biogaz provient de la fermentation de déchets. Ce gaz est recueilli par une installation spécifique et utilisé comme carburant dans le moteur 19. Dans cette variante, le module 1 est équipé à l'admission d'au moins une entrée d'air ambiant 20 et d'un injecteur ou répartiteur de gaz chaud 21. Ce dispositif est plus précisément décrit par la figure 4. L'injecteur 21 est relié par une conduite 22 à la sortie des gaz d'échappement 23 du moteur thermique 19. Un dispositif de dérivation et de régulation de débit 24 permet de réguler le débit d'injection des gaz d'échappement ayant une température de plusieurs centaines de degrés. Cette régulation peut être asservie par une sonde de température installée dans le module, ou consister plus simplement à un réglage manuel dans la mesure où l'invention ne nécessite pas obligatoirement une valeur de température précise, mais comprise dans une fourchette relativement large, par exemple entre 20° et 45°C. Le volume de gaz d'échappement est mélangé à l'admission du module avec de l'air ambiant pénétrant par les entrées 20. De plus, les gaz d'échappement sont lavés par l'effluent lors de leur passage à travers les mailles des panneaux d'évaporation.

La figure 4 illustre un exemple d'injecteur ou répartiteur de gaz. Une canalisation 25, obturée à ses deux extrémités, comporte une série de tubes 26 soudés perpendiculairement pour former les dents d'un peigne. Ces tubes 26 sont perforés par d'une série d'orifices 27 permettant l'éjection du gaz chaud. Une ouverture latérale 28 est reliée à la conduite 22 d'amenée des gaz d'échappement. La longueur de la canalisation 25 correspond généralement à la longueur du module et la longueur des tubes 26 à la hauteur du module fermé.

La figure 3B décrit une autre variante d'apport d'énergie calorifique au gaz d'évaporation. Un moteur thermique 19 est alimenté en biogaz 18 et l'échappement 23 est ici libre. Comme tout moteur thermique, un système de refroidissement, à air ou à eau, est indispensable pour contrôler la température des organes mécaniques du moteur. Un système externe 29 utilise le fluide de refroidissement du moteur comme source d'énergie thermique envoyée dans un échangeur 30 placé à l'admission du module de manière que l'air ambiant entrant par l'une ou l'autre des admissions 20 se réchauffe au contact des parois de l'échangeur 30. Les conduites 31 et 32 schématisent les conduites du circuit du fluide de refroidissement respectivement sortant et entrant dans un distributeur 33 qui régule la circulation du fluide chaud par d'autres conduites 34 et 35 dans l'échangeur 30. Grâce à ce dispositif, l'air ambiant recueille l'énergie calorifique apportée indirectement par la combustion du biogaz dans le moteur thermique pour régler la température du gaz d'évaporation.

Ainsi, le procédé et l'installation pour la mise en oeuvre de ce procédé optimise doublement la dépollution, par exemple, des sites de traitement d'ordures ménagères:
■ Il permet de réguler, par apport d'énergie calorifique, l'évapo-concentration naturelle des effluents, tout en restant dans les normes de l'évaporation naturelle traditionnelle;
■ Il permet également de laver des gaz d'échappement tout en utilisant l'énergie calorifique qu'ils produisent.

## Revendications

1. Procédé pour concentrer par évaporation un lixiviat de décharge sous l'effet d'une circulation d'un gaz d'évaporation à travers au moins un panneau alvéolaire (3) arrosé par ledit lixiviat, dans lequel on effectue les étapes suivantes:
■ on place ledit panneau (3) dans une enceinte fermée (2),
■ on effectue dans ladite enceinte une circulation forcée dudit gaz d'évaporation entre des moyens d'admission (5, 5') placés du coté arrosage dudit lixiviat et des moyens de sortie (8) du gaz, ledit panneau étant intercalé entre l'admission et la sortie de façon que ledit gaz passe à travers ledit panneau,
■ on équipe lesdits moyens d'admission de moyens d'apport d'énergie calorifique (21, 30) provenant de la combustion d'un biogaz produit par fermentation de déchets,
■ on régule la température dudit gaz de façon que ledit gaz ait une température comprise entre environ 25°C et 45°C.

2. Procédé selon la revendication 1, dans lequel on régule la température du gaz d'évaporation en injectant du gaz d'échappement provenant de la combustion d'un biogaz produit par fermentation de déchets.

3. Procédé selon la revendication 1, dans lequel on régule la température du gaz d'évaporation utilisant un échangeur thermique (30) dont l'énergie calorifique provient d'un fluide de refroidissement de moyens de combustion d'un biogaz produit par fermentation de déchets.

4. Procédé selon l'une des revendications précédentes, dans lequel ladite enceinte comporte des moyens d'aspiration (7) du gaz contenu dans ladite enceinte, par exemple un ventilateur.

5. Procédé selon l'une des revendications précédentes, dans lequel on filtre sur des charbons actifs catalysés le lixiviat et/ou le gaz d'évaporation.

6. Procédé selon l'une des revendications précédentes, dans lequel la partie du **lixiviat** non évaporé est recyclée en amont de l'arrosage du panneau.

7. Installation de traitement par évaporation d'un lixiviat de **décharge**, pour la mise en oeuvre du procédé selon l'une des revendications précédentes, comportant au moins un panneau alvéolaire (3) arrosé par ledit lixiviat grâce à des moyens de pompage (13), comportant une enceinte fermée (2), **caractérisée en ce que** ladite installation comporte des moyens pour recueillir des biogaz issus de fermentation de déchets, **en ce que** ladite enceinte comprend une admission (5, 5')placés du **coté arrosage dudit lixiviat** et une sortie (8) d'un gaz d'évaporation en circulation forcée dans ladite enceinte, **en ce que** ledit panneau est disposé dans ladite enceinte entre l'admission et la sortie du gaz, **en ce que** ladite admission comporte des moyens d'apport d'énergie calorifique (21, 30) **provenant de la combustion desdits biogaz, et en ce que ladite installation comporte des moyens pour réguler la température dudit gaz,** de façon que ledit gaz ait une température comprise entre 25°C et 45°C.

8. Installation selon la revendication 7, dans laquelle un ventilateur (7) disposé sur ladite enceinte effectue la circulation forcée du gaz.

9. Installation selon l'une des revendications 7 ou 8, dans laquelle un moteur thermique (19) alimenté par ledit biogaz est une source de l'énergie calorifique.

10. Installation selon la revendication 9, dans laquelle les gaz d'échappement dudit moteur thermique sont injectés dans ladite admission de gaz.

11. Installation selon la revendication 9, dans laquelle un échangeur équipe ladite admission et en ce que ledit échangeur utilise l'énergie calorifique du fluide de refroidissement dudit moteur thermique, qu'il soit gaz ou liquide.

12. Installation selon l'une des revendications 9 à 11, dans laquelle ledit moteur thermique entraîne un générateur d'énergie électrique, laquelle est notamment utilisée pour motoriser le ventilateur de circulation de gaz, les pompes de circulation de fluides, les télécommandes de vannes.

13. Installation selon l'une des revendications 7 à 12, dans laquelle ladite enceinte comprend des moyens de filtration du lixiviat non évaporé et/ou du gaz d'évaporation par des charbons actifs catalysés.

## Claims

1. Process for concentration by evaporation of a landfill leachate under the effect of circulation of an evaporation gas through at least one cellular panel (3) sprinkled by the said leachate, in which the following steps are performed:
■ the said panel (3) is placed in a closed chamber (2),
■ forced circulation of the said evaporation gas is effected in the said chamber, between inlet means (5, 5') placed on the side on which the said leachate is sprinkled and means for outlet (8) of the gas, the said panel being intercalated between the inlet and outlet so that the said gas passes through the said panel,
■ the said inlet means are provided with means for adding calorific energy (21, 30) emanating from combustion of a biogas produced by fermentation of waste,
■ the temperature of the said gas is so adjusted that the said gas has a temperature of between 25°C and 45°C.

2. Process as described in claim 1, in which the temperature of the evaporation gas is adjusted by injection of the exhaust gas from combustion of a biogas produced by fermentation of waste.

3. Process as described in claim 1, in which the temperature of the evaporation gas is adjusted using a heat-exchanger (30) the calorific energy of which emanates from a cooling fluid of means for combustion of a biogas produced by fermentation of waste.

4. Process as described in one of the preceding claims, in which the said chamber includes means for aspiration (7) of the gas contained in the said chamber, for example a fan.

5. Process as described in one of the preceding claims, in which the leachate and/or the evaporation gas is filtered over catalysed activated carbons.

6. Process as described in one of the preceding claims, in which the unevaporated part of the leachate is recycled upstream of sprinkling of the panel.

7. Apparatus for treatment of a landfill leachate by evaporation for implementation of the process as described in one of the preceding claims, including at least one cellular panel (3) sprinkled by the said leachate using pumping means (13), including a closed chamber (2), **characterised by** the fact that the said apparatus includes means for collecting biogases from fermentation of waste, by the fact that the said chamber includes an inlet (5, 5') placed on the side on which the said leachate is sprinkled and an outlet (8), for an evaporation gas under forced circulation in the said chamber, by the fact that the said panel is arranged in the said chamber between the gas inlet and outlet, by the fact that the said inlet includes means for adding calorific energy (21, 30) from combustion of the said biogases, and by the fact that the said apparatus includes means for adjusting the temperature of the said gas, so that the said gas has a temperature of between 25°C and 45°C.

8. Apparatus as described in claim 7, in which a fan (7) arranged on the said chamber effects the forced circulation of the gas.

9. Apparatus as described in one of claims 7 or 8, in which a heat engine (19) supplied with the said biogas is a source of calorific energy.

10. Apparatus as described in claim 9, in which the exhaust gases of the said heat engine are injected into the said gas inlet.

11. Apparatus as described in claim 9, in which the said inlet is provided with an exchanger and by the fact that the said exchanger uses the calorific energy of the cooling fluid of the said heat engine, whether it be gas or liquid.

12. Apparatus as described in one of claims 9 to 11, in which the said heat engine drives a generator of electrical energy, which is in particular used to drive the gas circulation fan, the fluid circulation pumps and the remote control of the valves.

13. Apparatus as described in one of claims 7 to 12, in which the said chamber includes means for filtration of the unevaporated leachate and/or of the evaporation gas by catalysed activated carbons.

## Patentansprüche

1. Verfahren zum Konzentrieren durch Verdampfen eines Müllsickerwassers unter der Einwirkung einer Zirkulation eines Verdampfungsgases durch mindestens eine Zelltafel (3), die mit dem Müllsickerwasser besprüht wird, bei dem man die folgenden Schritte durchführt:
• man stellt die Tafel (3) in einen geschlossenen Einschluss (2),
• man führt in dem Einschluss einen Zwangsumlauf der Verdampfungsgase zwischen Einlassmitteln (5, 5'), die auf der Sprühseite des Müllsickerwassers angeordnet sind, und Ausgangsmitteln (8) des Gases durch, wobei die Tafel zwischen den Einlass und den Ausgang derart eingefügt ist, dass das Gas durch die Tafel durchgeht,
• man stattet die Einlassmittel mit Mitteln zum Zuführen von Wärmeenergie (21, 30) aus, die von der Verbrennung eines Biogases stammt, das durch die Gärung von Abfall erzeugt wird,
• man regelt die Temperatur des Gases, so dass das Gas eine Temperatur zwischen etwa 25 °C und 45 °C hat.

2. Verfahren nach Anspruch 1, bei dem man die Temperatur des Verdampfungsgases reguliert, indem man Abgas, das von der Verbrennung eines Biogases stammt, das durch Abfallgärung erzeugt wird, einspritzt.

3. Verfahren nach Anspruch 1, bei dem man die Temperatur des Verdampfungsgases reguliert, indem man einen Wärmeaustauscher (30) verwendet, dessen Wärmeenergie von einem Kühlmittel von Mitteln zum Verbrennen eines Biogases, das durch Abfallgärung erzeugt wird, stammt.

4. Verfahren nach einem der vorhergehenden Ansprüche, bei dem der Einschluss Ansaugmittel (7) des Gases, das in dem Einschluss enthalten ist, zum Beispiel ein Gebläse, aufweist.

5. Verfahren nach einem der vorhergehenden Ansprüche, bei dem man auf katalysierter Aktivkohle das Müllsickerwasser und/oder das Verdampfungsgas filtert.

6. Verfahren nach einem der vorhergehenden Ansprüche, bei dem man den Teil des Müllsickerwassers, der nicht verdampft ist, stromaufwärts von dem Besprühen der Tafel recycliert.

7. Aufbereitungsanlage durch Verdampfen eines Müllsickerwassers zum Umsetzen des Verfahrens nach einem der vorhergehenden Ansprüche, die mindestens eine Zelltafel (3) aufweist, die von dem Müllsickerwasser dank Pumpmitteln (13) besprüht wird, die einen geschlossenen Einschluss (2) aufweist, **dadurch gekennzeichnet, dass** die Anlage Mittel zum Auffangen der Biogase aufweist, die aus der Gärung von Abfall hervorgehen, dass der Einschluss einen Einlass (5, 5') aufweist, der auf der Sprühseite des Müllsickerwassers angeordnet ist, und einen Ausgang (8) eines Verdampfungsgases in Zwangsumlauf in dem Einschluss, dass die Tafel in dem Einschluss zwischen dem Einlass und dem Auslass des Gases angeordnet ist, dass der Einlass Mittel zum Hinzufügen von Wärmeenergie (21, 30), die von der Verbrennung der Biogase stammt, aufweist, und dass die Anlage Mittel zum Regulieren der Temperatur des Gases aufweist, so dass das Gas eine Temperatur zwischen 25 °C und 45 °C hat.

8. Anlage nach Anspruch 7, bei der ein Gebläse (7), das auf dem Einschluss angeordnet ist, den Zwangsumlauf des Gases durchführt.

9. Anlage nach einem der Ansprüche 7 oder 8, bei der ein Verbrennungsmotor (19), der von dem Biogas versorgt wird, eine Wärmenergiequelle ist.

10. Anlage nach Anspruch 9, bei der die Abgase des Verbrennungsmotors in den Gaseinlass eingespritzt werden.

11. Anlage nach Anspruch 9, bei der ein Wärmeaustauscher den Einlass ausstattet, und wobei der Wärmeaustauscher die Wärmeenergie des Kühlmittels des Verbrennungsmotors verwendet, ob dieses nun Gas oder Flüssigkeit ist.

12. Anlage nach einem der Ansprüche 9 bis 11, bei der der Verbrennungsmotor einen Generator für elektrische Energie antreibt, welche insbesondere verwendet wird, um das Gaszirkulationsgebläse, die Fluidzirkulationspumpen, die Fernbedienungen von Schiebern anzutreiben.

13. Anlage nach einem der Ansprüche 7 bis 12, bei der der Einschluss Mittel zum Filtern des nicht verdampften Müllsickerwassers und/oder des Verdampfungsgases durch katalysierte Aktivkohle aufweist.
